# EUROPÄISCHE PATENTSCHRIFT

(11) **EP 1 999 815 B1**
(45) Veröffentlichungstag und Bekanntmachung des Hinweises auf die Patenterteilung: **27.10.2010**
(21) Anmeldenummer: 07727139.3
(22) Anmeldetag: 20.03.2007
(51) Int. Cl.: H01M 8/06, F02M 25/12

(54) **VORRICHTUNG, VERFAHREN UND SYSTEM ZUR GEWINNUNG VON THERMISCHER UND/ODER KINETISCHER SOWIE ELEKTRISCHER ENERGIE**
DEVICE, METHOD AND SYSTEM FOR PRODUCING THERMAL AND/OR KINETIC AND ELECTRICAL ENERGY
DISPOSITIF, PROCÉDÉ ET SYSTÈME DE PRODUCTION D'ÉNERGIE THERMIQUE ET/OU CINÉTIQUE ET D'ÉNERGIE ÉLECTRIQUE

(30) Priorität: 20.03.2006 DE 102006013037
(43) Veröffentlichungstag der Anmeldung: 10.12.2008
(73) Patentinhaber: Airbus Deutschland GmbH, 21129 Hamburg (DE); Deutsches Zentrum für Luft- und Raumfahrt e. V., 51147 Köln (DE)
(72) Erfinder: STOLTE, Ralf-Henning, 22525 Hamburg (DE); SABALLUS, Martin, 23738 Damlos (DE)
(74) Vertreter: Eisenführ, Speiser & Partner
(86) Internationale Anmeldenummer: PCT/EP2007/052662
(87) Internationale Veröffentlichungsnummer: WO 2007/107577

(56) Entgegenhaltungen:
- EP-A- 1 236 679
- WO-A-01/20703
- WO-A-98/40922
- DE-A1- 10 157 737
- US-A1- 2004 137 288
- US-A1- 2005 255 350

## Beschreibung

Die vorliegende Erfindung betrifft eine Vorrichtung zur Energiegewinnung aus einem Kohlenwasserstoffgemisch mit wenigstens einer dehydrierbaren Verbindung, insbesondere aus einem Kraftstoffgemisch auf Kohlenwasserstoffbasis, vorzugsweise aus Kerosin, mit einem Tank zur Bereitstellung des Kohlenwasserstoffgemisches und einer mit dem Tank verbundenen Verbrennungsmaschine zur Verbrennung von Kohlenwasserstoffen zur Gewinnung von thermischer und/oder kinetischer Energie. Die Erfindung betrifft zudem ein entsprechendes System und ein entsprechendes Verfahren.

In Flugzeugen des Typs "Airbus" ist neben den klassischen Flugzeugturbinen als Hauptaggregaten, die im Betrieb das Flugzeug vorantreiben und auch zur Gewinnung von elektrischer Energie genutzt werden können, bisher eine weitere Turbine als Hilfsaggregat oder "Auxiliary Power Unit" (APU) vorhanden, die beispielsweise bei abgeschalteten Hauptaggregaten am Boden das Flugzeug mit elektrischer Energie versorgen kann. Bei der Verbrennung von Kerosin in dieser APU werden Abgase freigesetzt, für die in vielen Fällen von Betreibern von Flughäfen zusätzliche Abgaben verlangt werden. Diese zusätzlichen Abgaben erhöhen die Kosten für den Betrieb des Flugzeugs und verschlechtern damit dessen Wirtschaftlichkeit.

Eine Möglichkeit, elektrische Energie zu gewinnen, ohne dabei unerwünschte Abgase freizusetzen, besteht in der Umsetzung von Wasserstoff mit Sauerstoff zu Wasser, beispielsweise in einer Brennstoffzelle.

Es ist jedoch vergleichsweise aufwendig, den Wasserstoff als solchen bereitzustellen. Insbesondere bei einem Flugzeug ist es teils aus Sicherheitsgründen und teils aus Gründen der Gewichtsersparnis nicht vernünftig, Wasserstoff selbst als gasförmigen oder verflüssigten Energieträger mitzuführen. Es erscheint daher vorteilhaft, den Wasserstoff erst im Betrieb direkt zum Verbrauch bereitzustellen oder zu erzeugen.

Eine herkömmliche Art der Bereitstellung bzw. Erzeugung von Wasserstoff besteht darin, ein Kohlenwasserstoffgemisch, beispielsweise einen Kraftstoff auf Kohlenwasserstoffbasis wie Kerosin oder Benzin, in einer autothermen Reformierung (ATR) bei einer Arbeitstemperatur von 800°C bis 1200°C zu Wasserstoff (Ausbeute: 20-30%), Kohlenmonoxid (CO, bis zu 10%), Methan (bis zu 1%) und Reststoffen umzusetzen. Der molare Wasserstoffertrag liegt bei einem trockenen Reformat zwischen 40% und 55% nach einer Gasreinigung.

Beispielsweise aus den Offenlegungsschriften DE 199 24 778 A1, DE 101 57 737 A1, DE 103 36 759 A1 und DE 103 38 227 A1 sind Verfahren und Vorrichtungen bekannt, bei denen aus einem Kraftstoffgemisch ein Anteil Kraftstoff abgezweigt wird, beispielsweise in Form einer Destillation, der dann einem Reformer zugeführt wird, wobei im Reformer in bekannter Weise der Kraftstoff aufgespalten wird, wie oben beschrieben.

Jedoch werden bei dieser Form der Wasserstoffgewinnung auch Nebenprodukte (u.a. Methan) freigesetzt, so dass eine völlige Abgasfreiheit nicht gegeben ist. Zudem ist ein sehr komplexes System nötig, was sich auch im Systemgewicht und -volumen äußert. Ein System zur autothermen Reformierung weist eine Trägheit auf, die bei dynamischen Anforderungen zu einer Reduzierung der Systemlebensdauer und/oder zu einer komplexeren Systemarchitektur führen kann. Der hohe Temperaturunterschied zwischen der autothermen Reformierung (800°C-1200°C) und der PrOx-Stufe (120°C-150°C) ist weiterhin von Nachteil. Insgesamt ist somit diese Art der Wasserstoffgewinnung insbesondere für einen Einsatz in einem Flugzeug ungeeignet.

Verschiedene Verfahren sind bekannt, bei denen Wasserstoff, der beispielsweise durch Elektrolyse von Wasser gewonnen wurde, in geeigneter Weise gebunden bzw. gespeichert wird und dann erst zum Verbrauch wieder freigesetzt wird. Beispielsweise kann Wasserstoff als Metallhydrid gespeichert werden. Ein anderes Verfahren zum Wasserstofftransport wird von S. Hodoshima et al. in "Catalytic decalin dehydrogenation/naphthalene hydrogenation pair as a hydrogen source for fuel-cell vehicle" (International Journal of Hydrogen Energy 28 (2003) 1255-1262) beschrieben. Hierbei wird Decalin als Wasserstoffträger an ein von einer Brennstoffzelle angetriebenes Fahrzeug gegeben, wo das Decalin zur Freisetzung des darin enthaltenen Wasserstoffs zu Naphthalin dehydriert wird. Das Naphthalin wird im Fahrzeug gespeichert und später zur Hydrierung wieder abgegeben. Nach der Hydrierung des Naphthalins steht damit wieder Decalin zur Verfügung, so dass sich ein geschlossener Kreislauf (Decalin, Naphthalin) ergibt.

Eine Bereitstellung des Wasserstoffs mittels eines derartigen herkömmlichen Trägermediums hat den Nachteil, dass das Trägermedium selbst eine zusätzliche Gewichtsbelastung darstellt, die insbesondere in einen Flugzeug nicht akzeptiert wird, da das Trägermedium, insbesondere das vom Wasserstoff befreite Trägermedium, keinen weiteren Nutzen aufweist und somit als "totes Gewicht" anzusehen ist.

Eine der vorliegenden Erfindung zugrunde liegende Aufgabe ist es daher, eine Vorrichtung, ein Verfahren und ein System bereitzustellen, bei denen auf effiziente Weise thermische, kinetische und elektrische Energie gewonnen wird. Insbesondere soll auf einfache und effiziente Weise Wasserstoff als Energieträger eingesetzt werden, um unerwünschte Abgasemissionen zu vermeiden oder zu verringern. Die Bereitstellung des Wasserstoffs soll insbesondere ohne starke Temperaturunterschiede innerhalb der Vorrichtung und mit möglichst wenig "totem Gewicht" gewährleistet werden.

Zur Lösung der obigen Aufgabe wird nach einem ersten Aspekt der Erfindung eine Vorrichtung zur Energiegewinnung aus einem Kohlenwasserstoffgemisch mit wenigstens einer dehydrierbaren Verbindung, insbesondere aus einem Kraftstoff auf Kohlenwasserstoffbasis, vorzugsweise aus Kerosin, vorgeschlagen, mit: einem Tank zur Bereitstellung des Kohlenwasserstoffgemisches und einer mit dem Tank verbundenen Verbrennungsmaschine zur Verbrennung von Kohlenwasserstoffen zur Gewinnung von thermischer und/oder kinetischer Energie, wobei die Vorrichtung zudem eine Trenneinrichtung zur zumindest teilweisen Abtrennung der wenigstens einen dehydrierbaren Verbindung aus dem Kohlenwasserstoffgemisch, Dehydrierungsmittel zur Gewinnung von Wasserstoff aus der abgetrennten dehydrierbaren Verbindung durch Dehydrierung, erste Zuführungsmittel zur mittelbaren oder unmittelbaren Zuführung der dehydrierten Verbindung zur Verbrennungsmaschine und eine Brennstoffzelle zur Gewinnung von elektrischer Energie unter Umsetzung des gewonnenen Wasserstoffs aufweist.

Zudem wird nach einem zweiten Aspekt der Erfindung ein System zur Energiegewinnung vorgeschlagen, mit einer erfindungsgemäßen Vorrichtung und einem Kohlenwasserstoffgemisch mit wenigstens einer dehydrierbaren Verbindung, insbesondere einem Kraftstoff auf Kohlenwasserstoffbasis, vorzugsweise Kerosin.

Im Zusammenhang mit der vorliegenden Erfindung ist der Begriff "Kohlenwasserstoffgemisch" nicht begrenzt auf Kohlenwasserstoffgemische basierend auf fossilen Quellen oder aus fossilen Quellen beschränkt, sondern der Begriff umfasst auch auf sonstige Weise bereitgestellte Kohlenwasserstoffgemische, insbesondere synthetische Kraftstoffe und Bio-Kraftstoffe, beispielsweise aus erneuerbaren Energieträgern.

Nach einem weiteren Aspekt der Erfindung wird ein Verfahren zur Energiegewinnung aus einem Kohlenwasserstoffgemisch mit wenigstens einer dehydrierbaren Verbindung, insbesondere aus einem Kraftstoff auf Kohlenwasserstoffbasis, vorzugsweise aus Kerosin, vorgeschlagen, mit den Schritten: Bereitstellen des Kohlenwasserstoffgemisches und Verbrennen von Kohlenwasserstoffen zur Gewinnung von thermischer und/oder kinetischer Energie, wobei das Verfahren als weitere Schritte umfasst: zumindest teilweises Abtrennen wenigstens einer vorbestimmten dehydrierbaren Verbindung aus dem Kohlenwasserstoffgemisch, Gewinnen von Wasserstoff aus der abgetrennten dehydrierbaren Verbindung durch Dehydrierung, mittelbares oder unmittelbares Zuführen der dehydrierten Verbindung zur Verbrennungsmaschine und Umsetzen des gewonnenen Wasserstoffs zur Gewinnung von elektrischer Energie.

Die Erfindung basiert auf der Erkenntnis, dass ein Kohlenwasserstoffgemisch, das als herkömmlicher Energieträger für eine Verbrennungsmaschine eingesetzt werden kann, zudem auch als Wasserstoffträger einsetzbar ist, sofern das Kohlenwasserstoffgemisch wenigstens eine dehydrierbare Verbindung aufweist, wobei der Wasserstoff der wenigstens einen dehydrierbaren Verbindung entzogen und die dehydrierte Verbindung selbst wiederum als Energieträger für die Verbrennungsmaschine eingesetzt wird. Auf diese Weise dient das Kohlenwasserstoffgemisch sowohl als Wasserstoffträger (Energieträger für eine Brennstoffzelle) als auch als Energieträger (für die Verbrennungsmaschine), womit darauf verzichten werden kann, für die Bereitstellung von Wasserstoff unnötiges "totes Gewicht" vorzusehen. Eine geeignete Art der Abtrennung der dehydrierbaren Verbindung aus dem Kohlenwasserstoffgemisch erlaubt es, gezielt aus der dehydrierbaren Verbindung den Wasserstoff zu gewinnen, ohne dass weitere in dem Kohlenwasserstoffgemisch enthaltene Verbindungen die Gewinnung des Wasserstoffs beeinträchtigen oder ihrerseits von dem Prozess der Gewinnung beeinträchtigt werden.

Der Begriff "Verbrennungsmaschine" steht im Rahmen in vorliegenden Zusammenhang für eine Wärmekraftmaschine, in der das Kohlenwasserstoffgemisch zur Gewinnung von thermischer und/oder kinetischer Energie oxidiert bzw. verbrannt wird. Beispiele von Verbrennungsmaschinen im Sinne der Erfindung sind Verbrennungsmotoren, Gasturbinen und Dampfturbinen. Verbrennungsmaschinen von besonderem Interesse im vorliegenden Zusammenhang sind in Flugzeugen eingesetzte Strahltriebwerke, insbesondere Turbinenluftstrahltriebwerke.

Es kann vorgesehen sein, dass nur ein einzelnes Element als Verbrennungsmaschine dient, beispielsweise eine einzelne Turbine. Andererseits können auch mehrere Turbinen zusammen die Verbrennungsmaschine darstellen. Hierbei ist es auch möglich, dass die Turbinen von unterschiedlichem Typ sind und beispielsweise unterschiedliche Anforderungen an die ihnen zugeführten Kohlenwasserstoffe stellen.

Das Abtrennen der wenigstens einen dehydrierbaren Verbindung teilt zumindest eine Teilmenge des Kohlenwasserstoffgemisches in wenigstens zwei Teile. Ein Teil umfasst zumindest einen Teil der wenigstens einen dehydrierbaren Verbindung und der bzw. die anderen Teile den verbleibenden Rest. Der andere Teil kann also als "Kohlenwasserstoffgemischrest" bezeichnet werden. Die Erfindung ist nicht darauf beschränkt, einzig eine einzelne dehydrierbare Verbindung von dem Kohlenwasserstoffgemisch abzutrennen, wenngleich dies in manchen Fällen vorteilhaft ist. Bei der Abtrennung der wenigstens einen dehydrierbaren Verbindung können auch andere Verbindungen mit abgetrennt werden, sogar andere nicht dehydrierbare Verbindungen. Es ist in manchen Fällen vorteilhaft, eine Vielzahl von dehydrierbaren Verbindungen gemeinsam abzutrennen. Im Extremfall kann zudem die wenigstens eine dehydrierbare Verbindung zusammen mit dem Großteil des Kohlenwasserstoffgemisches (einschließlich nicht dehydrierbarer Verbindungen) von einer einzelnen, unerwünschten Verbindung zumindest teilweise abgetrennt werden, die dann den "Kohlenwasserstoffgemischrest" darstellt.

Obgleich eine möglichst vollständige Abtrennung der dehydrierbaren Verbindung von Kohlenwasserstoffgemischrest bevorzugt wird, ist unter Abtrennung im vorliegenden Zusammenhang jede Trennung zu verstehen, nach der die getrennten Teile bzw. Teilmengen unterschiedliche Zusammensetzungen aufweisen bzw. bei der die Konzentration der dehydrierbaren Verbindung in einem der Teile erhöht und in einem anderen Teil verringert wird.

In einer weiteren Ausgestaltung der Erfindung besitzt die Vorrichtung zweite Zuführungsmittel zur mittelbaren oder unmittelbaren Zuführung des bei der Abtrennung der wenigstens einen dehydrierbaren Verbindung verbleibenden Kohlenwasserstoffgemischrestes zur Verbrennungsmaschine.

Wenn ein Teil des bereitgestellten Kohlenwasserstoffgemisches der Trenneinrichtung zur Abtrennung der wenigstens einen dehydrierbaren Verbindung zugeführt wird und der von diesem Teil nach der Abtrennung verbleibende Rest des Kohlenwasserstoffgemisches seinerseits der Verbrennungsmaschine zugeführt wird, so wird damit das bereitgestellte Kohlenwasserstoffgemisch weitestgehend genutzt.

In einer weiteren Ausgestaltung der erfindungsgemäßen Vorrichtung umfasst die Trenneinrichtung eine Destillationseinrichtung zur destillativen Abtrennung einer die dehydrierbare Verbindung umfassenden Fraktion und/oder eine Sorptionseinrichtung zur sorptiven Abtrennung der zumindest einen dehydrierbaren Verbi n-dung aus dem Kohlenwasserstoffgemisch.

Eine Destillation stellt eine einfache und effiziente Möglichkeit dar, eine dehydrierbare Verbindung aus dem Kohlenwasserstoffgemisch abzutrennen. Hierbei kann durch eine geeignete Steuerung des Destillationsvorgangs gezielt eingestellt werden, welche Bestandteile außer der dehydrierbaren Verbindung noch in der Fraktion vorhanden sind. Insbesondere ist es bei einer Destillation möglich, gezielt bestimmte Bestandteile bzw. Verbindungen des Kohlenwasserstoffgemisches nicht oder nur eingeschränkt mit in die Fraktion übergehen zu lassen.

Eine alternative oder ergänzende Möglichkeit der Abtrennung besteht darin, mit der Sorptionseinrichtung Mittel vorzusehen, die ausgestaltet sind, zumindest die eine dehydrierbare Verbindung zu absorbieren und/oder zu adsorbieren, um sie so aus dem Kohlenwasserstoffgemisch zu entfernen, wobei die Absorption und/oder Adsorption (zumindest teilweise) reversibel ist (zur Freigabe wenigstens der einen dehydrierbaren Verbindung). In an sich bekannter Weise kann diese sorptive Abtrennung auch in einem kontinuierlichen Prozess durchgeführt werden. Erfindungsgemäß kann zudem vorgesehen sein, dass die Sorptionseinrichtung in den Tank einbringbar ist, um zumindest eine dehydrierbare Verbindung vom im Betrieb im Tank befindlichen Kohlenwasserstoffgemisch abzutrennen.

Neben den bevorzugten Verfahren der Destillation und der Sorption können allerdings auch andere Trennverfahren im Rahmen der Erfindung eingesetzt werden.

In einer weiteren Ausgestaltung der erfindungsgemäßen Vorrichtung ist die Trenneinrichtung dazu eingerichtet, die dehydrierbare(n) Verbindung(en) bei der Abtrennung zumindest teilweise von einer vorbestimmten Verunreinigung zu befreien.

Bei der weiteren Verarbeitung, insbesondere bei der Dehydrierung, der abgetrennten dehydrierbaren Verbindung(en) können eine oder mehrere bestimmte in dem Kohlenwasserstoffgemisch enthaltene Verbindungen hinderlich oder gar schädlich sein und somit eine zu vermeidende Verunreinigung darstellen. Es ist daher vorteilhaft vorzusehen, dass eine als Verunreinigung anzusehende Verbindung gar nicht oder zumindest nur in ausreichend reduzierter Konzentration zusammen mit der dehydrierbaren Verbindung aus dem Kohlenwasserstoffgemisch abgetrennt wird.

Diese Reinigung bzw. zumindest teilweise Befreiung von der Verunreinigung kann auch in einem separaten Prozessschritt auf eine andere Weise als die restliche Abtrennung erfolgen. So ist es beispielsweise möglich, mittels einer geeigneten Destillation wenigstens eine dehydrierbare Verbindung abzutrennen, die zudem mittels einer Absorption oder Adsorption der Verunreinigung von dieser zumindest teilweise befreit wird. Die Reihenfolge der Teilschritte der Abtrennung können vom Fachmann frei gewählt werden. Im Fall einer Kombination von Destillation und Sorption (zur Reinigung) wird allerdings bevorzugt, die Destillation als ersten Teilschritt vor der Reinigung durchzuführen.

In einer vorteilhaften Ausgestaltung der erfindungsgemäßen Vorrichtung sind die ersten und/oder zweiten Zuführungsmittel zur Zuführung der dehydrierten Verbindung bzw. des Kohlenwasserstoffgemischrestes an die Verbrennungsmaschine via den Tank ausgestaltet.

Es ist nicht notwendig, die dehydrierte Verbindung bzw. den Kohlenwasserstoffgemischrest direkt an die Verbrennungsmaschine zu leiten. Die ersten und/oder zweiten Zuführungsmittel können auch dazu vorgesehen sein, im Betrieb die dehydrierte Verbindung bzw. den bei der Abtrennung verbleibenden Kohlenwasserstoffgemischrest in den Tank einzuleiten, z.B. um ihn dort mit dem im Tank befindlichen Kohlenwasserstoffgemisch zu mischen oder darin aufzulösen. Dies ist insbesondere dann vorteilhaft, wenn die Eigenschaften der dehydrierten Verbindung oder des Kohlenwasserstoffgemischrestes allein nicht die Anforderungen der Verbrennungsmaschine an einen Treibstoff erfüllen, die Eigenschaften des Kohlenwasserstoffgemisches allerdings bezüglich dieser Anforderung durch Zugabe von dehydrierter Verbindung bzw. Kohlenwasserstoffgemischrest nicht oder nur unwesentlich verändert werden.

In einer bevorzugten Ausgestaltung ist die erfindungsgemäße Vorrichtung zur Verarbeitung eines Flugzeugkerosins (als Kohlenwasserstoffgemisch) eingerichtet und die Trenneinrichtung ausgestaltet, eine oder mehrere dehydrierbare Verbindungen aus dem Flugzeugkerosin (Kohlenwasserstoffgemisch) abzutrennen, die ausgewählt sind aus der Gruppe bestehend aus Cyclohexan, Methlycyclohexan, Cis-Decalin, Trans-Decalin, n-Dodekan, Tetralin, Dipenten, Diethlybenzen und deren Mischungen.

Es wurde gefunden, dass die Erfindung sich besonders vorteilhaft in einem Flugzeug mit Flugzeugkerosin als Kohlenwasserstoffgemisch einsetzen lässt, wobei dann als besonders vorteilhafte dehydrierbare Verbindungen u.a. Cyclohexan, Methlycyclohexan, Cis-Decalin, Trans-Decalin, n-Dodekan, Tetralin, Dipenten, Diethlybenzen zur Verfügung stehen. Die genannten Verbindungen sind allerdings teilweise auch in Dieseltreibstoffen und Autobenzin enthalten, so dass die Erfindung sich auch hervorragend in Kraftfahrzeugen einsetzen lässt, deren Verbrennungsmaschinen für diese Treibstoffe ausgelegt sind.

In einer weiteren Ausgestaltung der erfindungsgemäßen Vorrichtung umfassen die Dehydrierungsmittel einen Katalysator für eine katalytische Dehydrierung der dehydrierbaren Verbindung.

Eine katalytische Dehydrierung hat gegenüber der erfindungsgemäß ebenfalls möglichen thermischen Dehydrierung den Vorteil, dass die dehydrierbare Verbindung nicht stark aufgeheizt werden muss, um eine Freisetzung des Wasserstoffs zu erreichen.

Beispiele geeigneter Katalysatoren, Katalysatoranordnungen und Verfahren zur katalytischen Dehydrierung lassen sich beispielsweise den Veröffentlichungen von S. Hodoshima et al.: "Catalytic decalin dehydrogenation / naphthalene hydrogenation pair as a hydrogen source for fuel-cell vehicle" (International Journal of Hydrogen Energy 28 (2003) 1255-1262) und "Hydrogen storage by decalin/naphthalene pair and hydrogen supply to fuel cells by use of superheated liquid-film-type catalysis" (Applied Catalysis A: General 283 (2005) 235-242) sowie den Veröffentlichungen von N. Kariya et al.: "Efficient evolution of hydrogen from liquid cycloalkanes over Pt-containing catalysts supported on active carbons under ,wet-dry multiphase conditions'" (Applied Catalysis A: General 233 (2002) 91-102) und "Efficient hydrogen production using cyclohexan and decalin by pulse-spray mode reactor with Pt catalysts" (Applied Catalysis A: General 247 (2003) 247-259) entnehmen. Eine katalytische Dehydrierung mit der dehydrierbaren Verbindung in flüssiger Phase hat den Vorteil eines geringeren Energiebedarfs, wobei allerdings im allgemeinen auch eine geringere Ausbeute an Wasserstoff erreicht wird. Soll die dehydrierbare Verbindung in die Gasphase gebracht werden, um dann katalytisch dehydriert zu werden, bedarf es hierzu eines erhöhten Energieaufwandes. Eine katalytische Reaktion in der Gasphase weist allerdings eine zumeist beschleunigte Reaktionskinetik auf. Als vorteilhaft wurden Bedingungen gefunden, bei denen die dehydrierbare Verbindung im Zustand einer überhitzten Flüssigkeit mit gesättigter Gasphase vorliegt.

Eine weitere vorteilhafte Ausgestaltung der Erfindung betrifft eine erfindungsgemäße Vorrichtung mit einer Steuerungseinheit zur Steuerung der Trenneinrichtung und einer mit der Steuerungseinheit verbundenen Analyseeinheit zur Analyse der Zusammensetzung eines bereitgestellten Kohlenwasserstoffgemisches im Betrieb, wobei die Steuerungseinheit ausgestaltet ist, im Betrieb die der Trenneinrichtung zugeführte Menge des Kohlenwasserstoffgemisches und das Abtrennen der wenigstens einen dehydrierbaren Verbindung daraus auf Basis der von der Analyseeinheit bestimmten Zusammensetzung zu steuern.

Im allgemeinen liegt in einem typischen Kohlenwasserstoffgemisch, beispielsweise Kerosin, nicht nur eine einzelne dehydrierbare Verbindung vor. Zumeist sind eine Reihe von dehydrierbaren Verbindungen vorhanden. Selbst wenn in einem bestimmten Kohlenwasserstoffgemisch nur jeweils eine dehydrierbare Verbindung vorhanden ist, kann in einem anderen Kohlenwasserstoffgemisch eine andere dehydrierbare Verbindung vorliegen. Ist die Vorrichtung mit einer Analyseneinheit ausgestattet und ist die Analyseneinheit mit der Steuerungseinheit verbunden, so dass Daten bezüglich der Zusammensetzung eines im Betrieb vorgefundenen Kohlenwasserstoffgemischs an die Steuerungseinheit gegeben werden können, so hat dies den Vorteil, dass diese Vorrichtung in flexibler Weise zur Verarbeitung des jeweils vorhandenen Kohlenwasserstoffgemischs mit der einen oder den vorliegenden dehydrierbaren Verbindungen eingestellt werden kann. Somit kann die Vorrichtung in dieser Ausgestaltung mit einer Vielzahl unterschiedlicher Kohlenwasserstoffgemische betrieben werden.

In einer weiteren Ausgestaltung der Erfindung ist die Steuerungseinheit ferner ausgestaltet, im Betrieb eine Gewinnung einer vorbestimmten Menge Wasserstoff pro Zeiteinheit zu gewährleisten.

Liegen beispielsweise mehrere unterschiedliche dehydrierbare Verbindungen in dem im Betrieb vorgefundenen Kohlenwasserstoffgemisch vor, so ist es mittels der Analyseeinheit möglich, die vorliegenden dehydrierbaren Verbindungen zu identifizieren und die Menge an Kohlenwasserstoffgemisch, die einer Abtrennung zugeführt wird, und die Abtrennung bzw. die Aufteilung des Kohlenwasserstoffgemisches so zu steuern, dass stets eine gewünschte Menge Wasserstoff pro Zeiteinheit gewonnen werden kann. So kann ein im wesentlichen kontinuierlicher Strombedarf durch die Umsetzung des Wasserstoffs befriedigt werden.

In einer weiteren Ausgestaltung der Erfindung ist die Steuerungseinheit ferner ausgestaltet, im Betrieb eine Gewinnung von Wasserstoff für einen vorbestimmten Zeitraum zu gewährleisten.

Es ist auch möglich, durch eine Steuerung der zur Abtrennung vorgesehenen Menge an Kohlenwasserstoffgemisch und der Abtrennung selbst im Hinblick auf die abgetrennte(n) Verbindung(en) sicherzustellen, dass eine vorbestimmte Mindestmenge an Wasserstoff zu jedem Zeitpunkt über einen gewünschten Zeitraum hinweg zur Verfügung steht. Es kann allerdings auch vorgesehen sein, dass die Mindestmenge an Wasserstoff nicht kontinuierlich erzeugt wird, sondern dass gewährleistet ist, dass zu jedem gewünschten Zeitpunkt innerhalb des vorbestimmten Zeitrahmens eine Wasserstoffgewinnung begonnen werden kann.

In einer bevorzugten Ausgestaltung der erfindungsgemäßen Vorrichtung ist die Steuerungseinheit ferner ausgestaltet, die Art der Zuführung der dehydrierten Verbindung und/oder des bei der Abtrennung der wenigstens einen dehydrierbaren Verbindung verbleibenden Kohlenwasserstoffgemischrestes zur Verbrennungsmaschine zu steuern.

Im Grundsatz bestehen zwei Möglichkeiten oder Arten, die dehydrierte Verbindung der Verbrennungsmaschine zuzuführen. Einerseits kann die dehydrie rte Verbindung direkt der Verbrennungsmaschine zugeführt werden. "Direkt" oder "unmittelbar" meint hierbei, dass die Zuführung im wesentlichen ohne eine Zwischenspeicherung erfolgt. Eine Zuführung über eine Leitung von der Trenneinrichtung zur Verbrennungsmaschine ist in diesem Zusammenhang als direkt zu verstehen. Eine mittelbare oder indirekte Zuführung ergibt sich beispielsweise, wenn die dehydrierte Verbindung in einem Tank zwischengespeichert wird. Dieser Tank kann der für das Kohlenwasserstoffgemisch vorgesehene Tank sein, so dass die dehydrierte Verbindung im Betrieb vor der Zuführung zur Verbrennungsmaschine mit dem im Tank vorliegenden Kohlenwasserstoffgemisch gemischt wird. Eine andere Art der indirekten Zuführung besteht darin, einen eigenen, separaten Tank zur Zwischenspeicherung vorzusehen und aus diesem Tank die dehydrierte Verbindung der Verbrennungsmaschine zuzuführen.

Das im vorangehenden Absatz ausgeführte gilt entsprechend auch für die Zuführung des Kohlenwasserstoffgemischrestes, der nach Zuführung einer Menge Kohlenwasserstoffgemisch zur Trenneinrichtung und Abtrennen der dehydrierbaren Verbindung übrigbleibt, zur Verbrennungsmaschine. Es kann auch vorgesehen sein, dass der Kohlenwasserstoffgemischrest und die dehydrierte Verbindung vor einer Zuführung zur Verbrennungsmaschine getrennt vom restlichen Kohlenwasserstoffgemisch miteinander gemischt werden.

In einer weiteren vorteilhaften Ausgestaltung der erfindungsgemäßen Vorrichtung ist die Steuerungseinheit ferner ausgestaltet, im Betrieb zu gewährleisten, dass vorbestimmte Eigenschaften der der Verbrennungsmaschine zugeführten Gesamtheit von Kohlenwasserstoffen innerhalb vorbestimmter Toleranzbereiche liegen.

Auf Basis der mittels der Analyseeinheit gewonnenen Daten zur Zusammensetzung des Kohlenwasserstoffgemisches kann bestimmt werden, in welcher Weise sich die Entnahme der dehydrierbaren Verbindung auf das Kohlenwasserstoffgemisch und seine Eigenschaften auswirkt. Entsprechend kann gegebenenfalls auch der Einfluss der Rückführung der dehydrierten Verbindung und/oder des bei einer Abtrennung auftretenden Kohlenwasserstoffgemischrestes in das Kohlenwasserstoffgemisch bestimmt werden. Die Bestimmung dieser Eigenschaften kann beispielsweise auf Basis empirischer Daten erfolgen oder auf geeigneten Simulationsrechnungen beruhen. Insbesondere im Flugzeugbereich werden an den Brennstoff Kerosin spezielle Anforderungen hinsichtlich seiner Eigenschaften gestellt. Beispielsweise darf die Schmelztemperatur des Kerosins einen bestimmten Wert nicht überschreiten. Im Fahrzeugbereich müssen Kraftstoffe wie Benzin oder Superbenzin bestimmte Anforderungen, beispielsweise hinsichtlich ihrer Oktanzahl, erfüllen. Sofern eine Entnahme der dehydrierbaren Verbindung oder eine Rückführung der dehydrierten Verbindung bzw. des Kohlenwasserstoffgemischrestes zum Kohlenwasserstoffgemisch vor der Verbrennung in der Verbrennungsmaschine zu einer Verschlechterung einer oder mehrerer Eigenschaften des Kohlenwasserstoffgemisches führt, wird gemäß dieser Ausgestaltung der Erfindung der gesamte Vorgang so gesteuert, dass die Eigenschaften der Gesamtheit von der Verbrennungsmaschine zugeführten Kohlenwasserstoffen (z.B. eines Gemisches umfassend dehydrierte Verbindung und Kohlenwasserstoffgemischrest) vorbestimmte Schwellenwerte nicht überschreiten bzw. unterschreiten. Beispielsweise kann dies dadurch geschehen, dass nach Abtrennen eines Teils einer ersten dehydrierbaren Verbindung eine andere dehydrierbare Verbindung abgetrennt oder dass die dehydrierbare(n) Verbindung(en) in einer veränderten Menge abgetrennt werden. Es kann zudem vorgesehen sein, dass die Durchführung des erfindungsgemäßen Verfahrens unterbrochen wird, wenn die gewünschten Parameterbereich ansonsten nicht mehr einzuhalten wären.

In einer weiteren Ausgestaltung der Erfindung besitzt die Steuerungseinheit eine Berechungseinheit, die eingerichtet ist, einen zeitlichen Verlauf der der Trenneinrichtung zugeführten Kohlenwasserstoffgemischmenge, der Abtrennung der wenigstens einen dehydrierbaren Verbindung in der Trenneinrichtung und/oder der Art der Zuführung der dehydrierten Verbindung und/oder des bei der Abtrennung der wenigstens einen dehydrierbaren Verbindung verbleibenden Kohlenwasserstoffgemischrestes zur Verbrennungsmaschine auf Basis der von der Analyseeinheit bestimmten Zusammensetzung zu bestimmen, so dass es bei diesem zeitlichen Verlauf gewährleistet ist, dass für einen vorbestimmten Zeitraum im Betrieb vorbestimmte Eigenschaften der der Verbrennungsmaschine zugeführten Gesamtheit von Kohlenwasserstoffen innerhalb vorbestimmter Toleranzbereiche liegen.

Vorteilhafterweise wird bei dieser Ausgestaltung der gesamte Verlauf der Gewinnung von Wasserstoff über einen bestimmten Zeitraum hinweg unter Verwendung der durch die Analyseneinheit bestimmten Informationen zur Zusammensetzung des Kohlenwasserstoffgemisches bestimmt. Insbesondere kann bei der Berechnung des zeitlichen Verlaufs festgestellt werden, ob und auf welche Weise die gewünschten Toleranzbereiche für den gewünschten Zeitraum eingehalten werden können. Wird beispielsweise beim Tanken eines Flugzeugs mit der erfindungsgemäßen Vorrichtung erkannt, dass mit dem zur Verfügung stehenden Treibstoff das erfindungsgemäße Verfahren nicht für die gesamte Missionsdauer in gewünschter Weise durchgeführt werden kann, so können rechtzeitig geeignete Vorkehrungen getroffen werden, dieses Problem zu umgehen oder zu beseitigen.

In einer vorteilhaften Ausgestaltung der erfindungsgemäßen Vorrichtung weist diese eine Mischeinheit zur Herstellung einer Mischung aus dem Kohlenwasserstoffgemisch, dem bei der Abtrennung der wenigstens einen dehydrierbaren Verbindung verbleibenden Kohlenwasserstoffgemischrest und der dehydrierten Verbindung in vorbestimmten Anteilen und eine Messeinheit zur Messung vorbestimmter Eigenschaften der Mischung auf.

Mit Hilfe der Mischeinheit kann der Vorgang des Mischens von dehydrierter Verbindung, Kohlenwasserstoffgemischrest und Kohlenwasserstoffgemisch unter bestimmten Prozessbedinungungen untersucht werden, ohne dass das erfindungsgemäße Verfahren tatsächlich mit diesen Parametern durchgeführt werden muss. Auf diese Weise kann zeitnah von der Vorrichtung selbst mittels der Messeinheit bestimmt werden, welche Auswirkungen eine solches Mischen auf die Eigenschaften der Mischung hat. So können beispielsweise konkrete Daten gewonnen werden, anhand derer der zeitliche Verlauf des erfindungsgemäßen Verfahrens prognostiziert werden kann.

In einer weiteren Ausgestaltung ist die erfindungsgemäße Vorrichtung mit einem Wasserspeicher zur Aufnahme von in der Brennstoffzelle erzeugtem Wasser ausgestattet.

Das bei der Umsetzung des Wasserstoffs in der Brennstoffzelle an Bord eines Flugzeugs gewonnene Wasser kann beispielsweise als Brauchwasser eingesetzt werden, womit sich eine Gewichtsersparnis dadurch ergibt, dass weniger Wasser im Flugzeug vom Start an mitgeführt werden muss.

Das erfindungsgemäße System umfasst vorzugsweise eine erfindungsgemäße Vorrichtung in einer bevorzugten Ausgestaltung wie vorstehend beschrieben.

Ein erfindungsgemäßes Verfahren wird vorzugsweise unter Verwendung eines erfindungsgemäßen Systems durchgeführt.

Weitere bevorzugte Ausgestaltungen der Erfindung ergeben sich aus den nachfolgenden Beispielen und den Patentansprüchen.

Im folgenden wird die Erfindung anhand bevorzugter Ausführungsbeispiele mit Bezug auf die beliegenden Figuren näher erläutert. Es zeigen hierbei schematisch:
- Fig. 1: ein erstes Ausführungsbeispiel einer erfindungsgemäßen Vorrichtung mit einem Kohlenwasserstoffgemisch,
- Fig. 2: ein zweites Ausführungsbeispiel einer erfindungsgemäßen Vorrich- tung,
- Fig. 3: ein Flussdiagramm zur Veranschaulichung eines ersten Ausfüh- rungsbeispiels des erfindungsgemäßen Verfahrens und
- Fig. 4: ein Flussdiagramm zur Veranschaulichung eines zweiten Ausfüh- rungsbeispiels des erfindungsgemäßen Verfahrens.

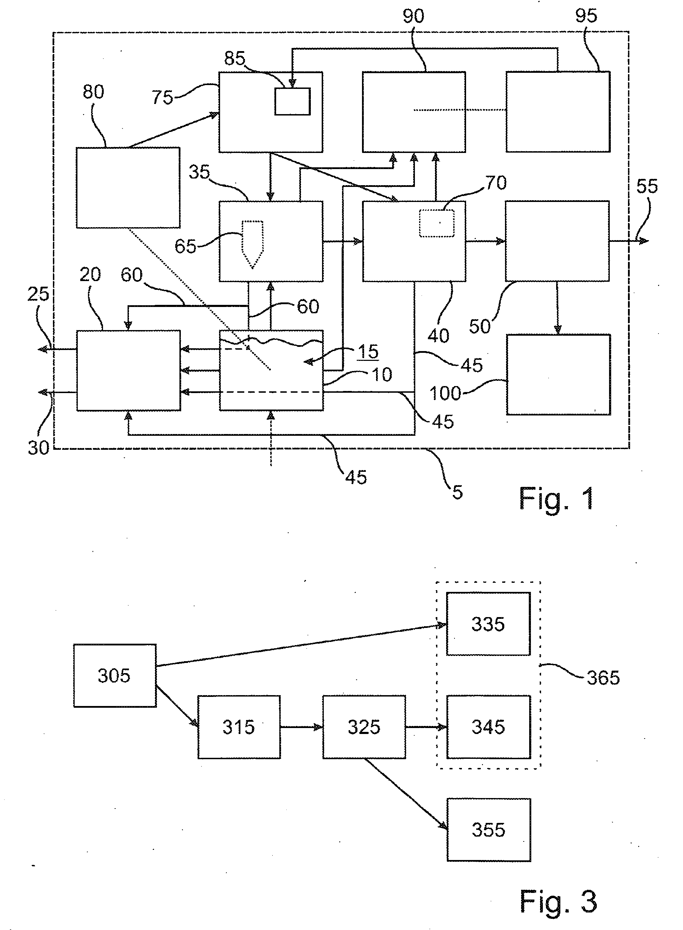

Fig. 1 zeigt schematisch ein erstes Ausführungsbeispiel einer erfindungsgemäßen Vorrichtung mit einem Kohlenwasserstoffgemisch. Die Vorrichtung 5 zur Energiegewinnung besitzt einen Tank 10, der hier ein flüssiges Kohlenwasserstoffgemisch 15 beinhaltet, eine mit dem Tank verbundene Verbrennungsmaschine 20, eine ebenfalls mit dem Tank verbundene Trenneinrichtung 35, Dehydrierungsmittel 40, erste Zuführungsmittel 45, die die Dehydrierungsmittel mit dem Tank bzw. der Verbrennungsmaschine verbinden, und eine Brennstoffzelle 50. Die Vorrichtung weist zudem zweite Zuführungsmittel 60 auf, die die Trenneinrichtung 35 und die Verbrennungsmaschine 20 bzw. den Tank 10 verbinden. Die Trenneinrichtung 35 besitzt ein Element 65 zur fraktionierten Destillation. Die Dehydrierungsmittel 40 umfassen einen Katalysator 70. Die Vorrichtung umfasst weiterhin eine mit der Trenneinrichtung 35 und den Dehydrierungsmitteln 40 verbundene Steuerungseinheit 75 mit einer Berechnungseinheit 85, eine Analyseneinheit 80, eine Mischeinheit 90, eine Messeinheit 95 und einen Wasserspeicher 100.

Das flüssige Kohlenwasserstoffgemisch 15, das in diesem Beispiel Flugzeugkerosin ist, wird im Tank 10 aufgenommen. Ein Teil des Kohlenwasserstoffgemisches 15 wird dem Tank 10 entnommen und der Trenneinrichtung 35 zugeführt. Ein anderer Teil des Kohlenwasserstoffgemisches 15 wird dem Tank entnommen und in der Verbrennungsmaschine 20, hier einer Flugzeugturbine, verbrannt, um daraus thermische Energie 25 und kinetische Energie 30 zu gewinnen, insbesondere um das Flugzeug, in dem die Vorrichtung 5 angeordnet ist, anzutreiben.

Die Erfindung ist nicht auf flüssige Kohlenwasserstoffgemische beschränkt, obwohl diese aufgrund der einfachen Handhabung bevorzugt sind. Es ist auch möglich, gasförmige oder feste Kohlenwasserstoffgemische einzusetzen. Entsprechendes gilt natürlich auch für die dehydrierbare Verbindung, die dehydrierte Verbindung und den Kohlenwasserstoffgemischrest.

In der Trenneinrichtung 35 wird wenigstens eine dehydrierbare Verbindung von dem Kohlenwasserstoffgemisch abgetrennt. Typisches Flugzeugkerosin enthält unter anderem Cyclohexan, Methlycyclohexan, Cis-Decalin, Trans-Decalin, n-Dodekan, Tetralin, Dipenten und Diethlybenzen als dehydrierbare Verbindungen. Im vorliegenden Ausführungsbeispiel ist die Trenneinrichtung mit einem Element 65 zur fraktionierten Destillation ausgerüstet, um Cis-Decalin und Trans-Decalin mit einem Verdampfungspunkt von 194,6°C bzw. 185,5°C aus dem Kohlenwasserstoffgemisch abzutrennen. Die Destillation ist nur eine zur Verfügung stehende Option zur Abtrennung. Eine weitere, alternative oder ergänzende Möglichkeit besteht insbesondere darin, die dehydrierbare Verbindung mittels einer Absorption und/oder einer Adsorption in bzw. an einem geeigneten Sorptionsmittel vom Kohlenwasserstoffgemischrest zu trennen und der weiteren Bearbeitung zuzuführen. Es lassen sich im Rahmen der vorliegenden Erfindung aber auch andere, dem Fachmann geeignet erscheinende Verfahren zur Abtrennung der dehydrierbaren Verbindung einsetzen. Bei der Abtrennung ergibt sich somit eine Aufteilung des der Trenneinrichtung zugeführten Kohlenwasserstoffgemisches in einen Teil, der wenigstens eine dehydrierbare Verbindung, hier Cis-Decalin und Trans-Decalin, aufweist und einen Kohlenwasserstoffgemischrest. Es ist zwar zumeist bevorzugt, die dehydrierbare(n) Verbindung(en) vollständig aus dem Kohlenwasserstoffgemisch 15 abzutrennen; dies ist aber nicht zwingend notwendig. Auch der Kohlenwasserstoffgemischrest kann somit dehydrierbare Verbindungen enthalten. Vorliegend ist es nicht ausgeschlossen, dass der Kohlenwasserstoffgemischrest auch noch Cis- oder Trans-Decalin enthält.

Die abgetrennten dehydrierbaren Verbindungen werden den Dehydrierungsmitteln 40 zugeführt, während der Kohlenwasserstoffgemischrest über die zweiten Zuführungsmittel 60 wahlweise in den Tank 10 zum Kohlenwasserstoffgemisch 15 oder direkt zur Verbrennungsmaschine 20 geleitet wird. Es ist nicht notwendig, dass beide Optionen zur Verfügung stehen. In alternativen Ausgestaltungen kann der Kohlenwasserstoffgemischrest auch ausschließlich direkt zur Verbrennungsmaschine 20 zur Verbrennung oder nur in den Tank 10 zum Mischen mit dem dort vorliegenden Kohlenwasserstoffgemisch 15 und zur späteren Verbrennung geleitet werden. Eine weitere Alternative oder Ergänzung besteht darin, einen eigenen Tank für den Kohlenwasserstoffgemischrest vorzusehen, um den Kohlenwasserstoffgemischrest zumindest zwischenzulagern.

Die Dehydrierungsmittel 40 des vorliegenden Ausführungsbeispiels weisen einen Katalysator 70 zur katalytischen Dehydrierung der dehydrierbaren Verbindung(en) auf.

Erfindungsgemäß werden die folgenden Katalysatoren für die Dehydrierung einzeln oder in Kombination bevorzugt: (a) Metalle, ausgewählt aus der Gruppe bestehend aus Platin (Pt), Palladium (Pd), Rhodium (Rh), Osmium (Os), Ruthenium (Ru), Rhenium (Re), Wolfram (W), Iridium (Ir), Molybdän (Mo), und Legierungen daraus, (b) Kombinationen von mindestens zwei der vorgenannten Metallen (Bi- oder Oligolayer), und zwar jeweils (i) in metallischer Form, (ii) auf einem Trägermaterial, beispielsweise auf einem Zeolith oder auf Kohlenstoff, und/oder (iii) als metallorganische Komplexe, wie z.B. Metallcarbonylkomplexe. Alternativ oder ergänzend zur katalytischen Dehydrierung kann beispielsweise eine thermische Dehydrierung oder ein anderes geeignetes Verfahren Verwendung finden. Liegen, wie im vorliegenden Fall, mehrere dehydrierbare Verbindungen im Kohlenwasserstoffgemisch 15 vor, so können vorteilhafterweise spezielle Katalysatoren für jede oder einzelne dehydrierbare Verbindungen vorgesehen werden. Bei der Dehydrierung wird die jeweilige (jede) dehydrierbare Verbindung in Wasserstoff und eine (oder mehrere) dehydrierte Verbindungen aufgespalten. Der Wasserstoff wird der Brennstoffzelle 50 zugeführt, wo er auf an sich bekannte Weise zur Erzeugung von elektrischer Energie 55 umgesetzt wird. Das dabei entstehende Wasser wird in einem Wasserspeicher 100 gesammelt und kann als Brauchwasser im Flugzeug eingesetzt werden. Die dehydrierte(n) Verbindung(en) wird (werden) mittels der ersten Zuführungsmittel 45 mittelbar (via den Tank 10) oder unmittelbar an die Verbrennungsmaschine geleitet.

Die Analyseneinheit 80 bestimmt die Zusammensetzung des Kohlenwasserstoffgemisches im Tank 10, beispielsweise mittels Massenspektrometrie, und übermittelt die erfasste Zusammensetzung, bei der insbesondere die Anteile an dehydrierbaren Verbindungen von Interesse sind, an die Steuerungseinheit 75.

In der Mischeinheit 90 wird eine Mischung aus Kohlenwasserstoffgemisch 15 (aus dem Tank 10), dehydrierter Verbindung(en) (von den Dehydrierungsmitteln 40 bereitgestellt) und Kohlenwasserstoffgemischrest (von der Trenneinrichtung 35 bereitgestellt) in gewünschten Anteilen bereitet. Gewünschte Eigenschaften dieser Mischung, beispielsweise Schmelzpunkt im Fall von Flugzeugkerosin als Kohlenwasserstoffgemisch 15 oder Oktanzahl im Fall von Auto-Benzin, werden mittels der Messeinheit 95 bestimmt. Die ermittelten Werte werden ebenfalls an die Steuerungseinheit 75, genauer an die Berechnungseinheit 85 der Steuerungseinheit 75, übermittelt.

Die Berechungseinheit 85 ist mit Algorithmen zur Berechnung eines optimierten zeitlichen Verlaufs des Verfahrens ausgestattet. Auf Grundlage dieser Berechnung, zu deren Parametern die der Trenneinrichtung 35 zugeführte Kohlenwasserstoffgemischmenge, Art und Umfang der Abtrennung der dehydrierbaren Verbindung in der Trenneinrichtung 35, die Art und der Zeitpunkt der Zuführung der dehydrierten Verbindung und des Kohlenwasserstoffgemischrestes zur Verbrennungsmaschine gehören, steuert die Steuerungseinheit 75 das in der Vorrichtung durchgeführte Verfahren. Die Steuerungseinheit 75 nimmt dabei auf die Trenneinrichtung 35 und die Dehydrierungsmittel 40 Einfluss. Zudem steuert die Steuerungseinheit die ersten und zweiten Zuführungsmittel 45, 60.

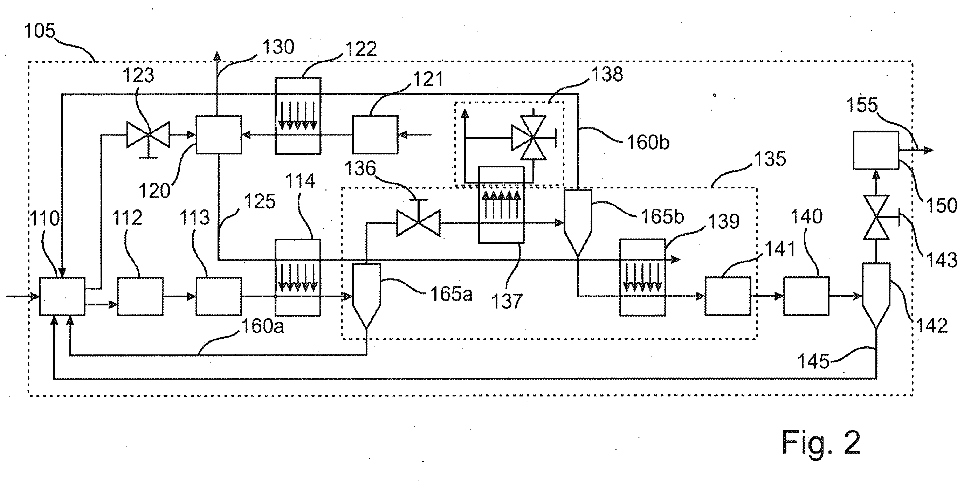

Fig. 2 zeigt schematisch ein zweites Ausführungsbeispiel einer erfindungsgemäßen Vorrichtung. Die Vorrichtung 105 umfasst einen Tank 110, der über ein Filter 112, eine Pumpe 113 und einen Wärmetauscher 114 mit einer Trenneinrichtung 135 verbunden ist. Der Tank 105 ist zudem via ein Ventil 123 mit einer Verbrennungsmaschine 120 verbunden. Die Verbrennungsmaschine 120 ist ein Kerosinbrenner, wie er typischerweise Bestandteil eines bei Flugzeugen eingesetzten Strahltriebwerks ist. Der Brenner 120 erhält seine Zuluft von einer Verdichterstufe 121 durch einen weiteren Wärmetauscher 122. Die Vorrichtung 105 weist zudem einen Kühlkreis 138 auf. Außerdem umfasst die Vorrichtung 105 an die Trenneinrichtung 135 angeschlossene Dehydrierungsmittel 140, die zu einer Trenneinheit 142 führen, die über erste Zuführungsmittel 145 mit dem Tank und via ein Ventil 143 mit einer Brennstoffzelle 150 verbunden ist. Die Trenneinrichtung 135 ist weiterhin über zweite Zuführungsmittel 160a, 160b mit dem Tank 110 verbunden und umfasst ein erstes Destillierelement 165a, ein Ventil 136, einen Wärmetauscher 137, ein zweites Destillierelement 165b, einen weiteren Wärmetauscher 139 und eine Entschwefelungseinheit 141.

Der Tank 110 ist zur Aufnahme des Kohlenwasserstoffgemisches (nicht gezeigt), beispielsweise Kerosin, ausgestaltet. Vom Tank 110 führt eine Leitung mit dem Ventil 123 zur Regelung des Kohlenwasserstoffzuflusses zum Brenner 120. Der Brenner 120 erhält die zur Verbrennung der Kohlenwasserstoffe benötigte Luft von einer Verdichterstufe 121, verdichtet über einen Wärmetauscher 122. Der Zweck dieses Wärmetauschers 122 wird später erläutert. Bei der Verbrennung der dem Brenner 120 zugeführten Kohlenwasserstoffe wird thermische Energie 125 und kinetische Energie 130 gewonnen. Zumindest ein Teil der thermischen Energie 125 wird den Wärmetauschern 114 und 139 zugeführt.

Ein Teil eines im Tank 110 befindlichen Kohlenwasserstoffgemisches wird in dem Filter 112 gereinigt und einer Pumpe 113 zugeführt. Die Pumpe 113 fördert einen Teil des Kohlenwasserstoffgemisches durch den Wärmetauscher 114, bei dem thermische Energie 125 von den Abgasen des Brenners 120 zum Kohlenwasserstoffgemisch übergeht. In dem ersten Destillierelement. 165a wird ein leichter, bei der Prozesstemperatur gasförmiger Anteil vom schwereren, flüssigen Anteil des Kohlenwasserstoffgemisches getrennt. Der flüssige Kohlenwasserstoffgemischrest wird über die zweiten Zuführungsmittel 160a dem Tank 110 zugeführt und dort mit dem verbliebenen Kohlenwasserstoffgemisch vermengt. Der gasförmige Anteil wird zur Druckeinstellung durch das Ventil 136 und zur Abkühlung durch den Wärmetauscher 137 geleitet. Im Wärmetauscher wird Wärme an den Kühlkreis 138 abgegeben. Der abgekühlte, zuvor vollständig und nun noch teilweise gasförmige Anteil wird vom Wärmetauscher 137 in das zweite Destillierelement 165b geleitet, in dem die dehydrierbare Verbindung von niedriger siedenden Anteilen getrennt wird, die wiederum mit den zweiten Zuführungsmitteln 160b durch den Wärmetauscher 122 zum Tank geleitet werden. Der Wärmetauscher 122 dient dazu, diese gasförmigen Anteile soweit abzukühlen, dass sie in flüssiger Form zum im Tank 110 befindlichen Kohlenwasserstoffgemisch gegeben werden können. Der die wenigstens eine dehydrierbare Verbindung, in diesem Beispiel Methycyclohexan, enthaltende flüssige Anteil wird nun vom zweiten Destillierelement 165b zum Wärmetauscher 139 geleitet und dort vom Abgas des Brenners 120 wiederum erhitzt, so dass gewünschte Temperatur- und Druckverhältnisse eingestellt werden. Bevor die dehydrierbare Verbindung an die Dehydrierungsmittel 140 gegeben werden, erfolgt eine Entschwefelung in der Entschwefelungseinheit 141. Schwefel stellt ein Katalysatorgift dar und liegt in herkömmlichen Kerosin in Konzentrationen von bis zu 3000 ppm vor. Die derzeit bekannten widerstandsfähigsten Katalysatoren eignen sich allerdings nur für Schwefelkonzentrationen bis zu wenigen ppm. Bereits durch die Destillation bzw. allgemein durch die Abtrennung der dehydrierbaren Verbindung wird im allgemeinen erreicht, dass die Schwefelkonzentration sinkt. Um eine weitere Reduzierung zu erreichen und als zusätzliche Sicherheitsmaßnahme für die in den Dehydrierungsmitteln 140 eingesetzten Katalysatoren ist gemäß Fig. 2 aber dennoch die Entschwefelungseinheit 141 vorgesehen. Die weiter entschwefelte dehydrierbare Verbindung wird an die Dehydrierungsmittel 140 gegeben, in denen teilweise Wasserstoff aus ihnen abgetrennt wird. In der Trenneinheit 142 wird der abgetrennte Wasserstoff von der dehydrierten Verbindung, im Falle von Methylcyclohexan also Toluol, getrennt. Die dehydrierte Verbindung wird über die ersten Zuführungsmittel 145 in den Tank 110 geleitet. Ein Ventil 143 dient zur Einstellung des Druckes des der Brennstoffzelle 150 zugeführten Wasserstoffs. In der Brennstoffzelle 150 wird durch Umsetzung des Wasserstoffs elektrische Energie 155 gewonnen.

Fig. 3 zeigt ein Flussdiagramm zur Veranschaulichung eines ersten Ausführungsbeispiels des erfindungsgemäßen Verfahrens. In einem ersten Schritt 305 wird ein Kohlenwasserstoffgemisch mit wenigstens einer dehydrierbaren Verbindung bereitgestellt. Dies kann beispielsweise wie oben beschrieben in einem Tank geschehen. In einem anschließenden Schritt 315 wird wenigstens ein Teil der dehydrierbaren Verbindung aus dem Kohlenwasserstoffgemisch abgetrennt. Ein mögliches Verfahren zur Abtrennung besteht beispielsweise in einer geeignet gesteuerten Destillation. Insbesondere die oben beschriebenen Vorrichtungen umfassen Einrichtungen, die zur Abtrennung dienen können. Jedoch können auch andere, dem Fachmann geläufige Verfahren für die Abtrennung eingesetzt werden. An den Schritt 315 schließt sich ein Schritt 325 des Gewinnens von Wasserstoff aus der abgetrennten dehydrierbaren Verbindung durch Dehydrierung an. Dazu sind bevorzugt die oben beschriebenen Dehydrierungsmittel geeignet. Besonders bevorzugt ist eine katalytische Dehydrierung. Der bei der Dehydrierung gewonnene Wasserstoff wird in Schritt 355 zur Gewinnung von elektrischer Energie umgesetzt. Die bei der Dehydrierung zurückbleibende dehydrierte Verbindung wird in Schritt 345 mittelbar oder unmittelbar der Verbrennungsmaschine zugeführt und kann dort zusammen oder separat zur Gewinnung von thermischer und/oder kinetischer Energie umgesetzt werden. Parallel zu den genannten Schritten kann auch ein Teil des Kohlenwasserstoffgemisches direkt der Verbrennungsmaschine zugeführt und dort zur Gewinnung von thermischer und/oder kinetischer Energie verbrannt werden (Schritt 335). In einem übergeordneten Verfahrensabschnitt 365 werden somit Kohlenwasserstoffe von möglicherweise unterschiedlicher Zusammensetzung zur Energiegewinnung verbrannt.

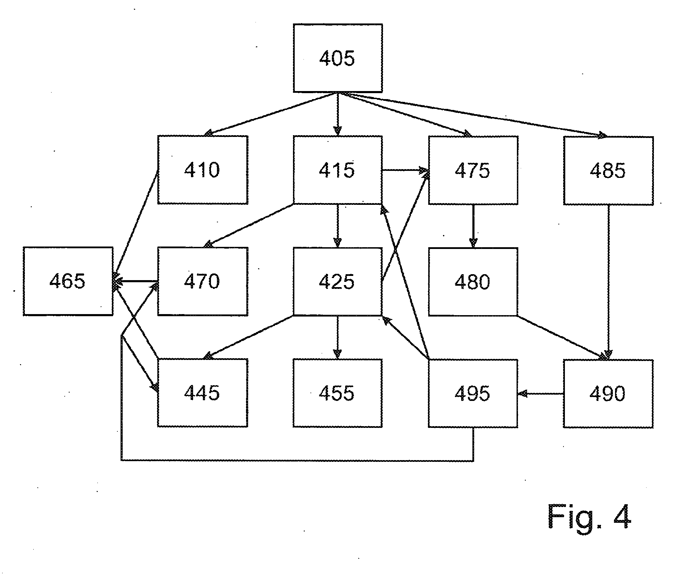

Fig. 4 zeigt ein Flussdiagramm zur Veranschaulichung eines zweiten Ausführungsbeispiels des erfindungsgemäßen Verfahrens. In einem ersten Schritt 405 wird Kerosin als Kohlenwasserstoffgemisch mit wenigstens einer dehydrierbaren Verbindung bereitgestellt. Von dem bereitgestellten Kerosin bzw. einem Teil davon wird in Schritt 415 zumindest teilweise die dehydrierbare Verbindung abgetrennt. Danach liegen somit die dehydrierbare Verbindung (ggf. zusammen mit anderen Verbindungen) einerseits und der Kohlenwasserstoffgemischrest andererseits vor. In einem Schritt 470 der Zuführung wird der Kohlenwasserstoffgemischrest zur Verbrennung 465 gegeben. Zudem kann auch eine bestimmte Menge des bereitgestellten Kerosins der Verbrennung zugeführt werden (Schritt 410). Die dehydrierbare Verbindung wird in Schritt 425 dehydriert, bevorzugt unter Zuhilfenahme eines oder mehrerer Katalysatoren. Damit liegt Wasserstoff vor, der in Schritt 455 in der Brennstoffzelle zur Gewinnung von elektrischer Energie umgesetzt wird. Die sich bei der Dehydrierung 425 ergebende dehydrierte Verbindung wird in Schritt 445 der Verbrennungsmaschine zur Verbrennung 465 zugeführt. Parallel zu den obigen Schritten wird in Schritt 485 nach der Bereitstellung 405 des Kerosins das Kerosin in seiner Zusammensetzung analysiert. Zudem werden in Schritt 475 ein Teil des bereitgestellten Kerosins, ein Teil des bei der Abtrennung 415 verbleibenden Kohlenwasserstoffgemischrestes und ein Teil der in Schritt 425 dehydrierten Verbindung in einem vorbestimmten Verhältnis gemischt. Die damit erzeugte Mischung wird hinsichtlich vorbestimmter Eigenschaften, beispielsweise Gefrier- oder Schmelzpunkt, untersucht und vermessen (Schritt 480). Die Ergebnisse der Messung aus Schritt 480 und der Analyse aus Schritt 485 fließen in eine Berechung (Schritt 490) ein, deren Ergebnis als Basis für eine Steuerung der Abtrennung (Schritt 415), der Dehydrierung (Schritt 425), der Zuführung des Kohlenwasserstoffgemischrestes zur Verbrennung (Schritt 470) und der dehydrierten Verbindung zur Verbrennung (Schritt 445) in Schritt 495 eingesetzt werden. Somit kann sichergestellt werden, dass die Gesamtheit der der Verbrennungsmaschine zugeführten Kohlenwasserstoffe Eigenschaften innerhalb von vorgegebenen Toleranzbereichen hat und so den Anforderungen der Technik oder der Normen an einen Treibstoff für die Verbrennungsmaschine gerecht wird.

Die hier beschriebenen Ausführungsbeispiele dienen der Veranschaulichung der Erfindung. Einzelne oder mehrere Merkmale der beschriebenen Ausführungsbeispiele können im Rahmen der Erfindung auch auf andere als die dargestellte Weise miteinander kombiniert werden.

Erfindungsgemäß kann ein Kraftstoff auf Kohlenwasserstoffbasis als flüssiger Wasserstoffträger eingesetzt werden, aus dem beispielsweise mittels fraktionierter Destillation eine bestimmte oder mehrere Fraktionen entnommen werden, die wenigstens eine dehydrierbare Verbindung enthalten. Die dehydrierbare Verbindung wird dehydriert und der Rest beispielsweise dem Kraftstoff wieder zugeführt.

Die Erfindung erlaubt es, Wasserstoff mittels einer kompakten und leichten Anlage bei vergleichsweise niedrigen Arbeitstemperaturen (< 350°C) mit einer geringen Systemkomplexität in guter Reinheit bereitzustellen. Bei einer ausreichend guten Abtrennung kann auf eine zusätzliche Entschwefelung verzichtet werden. Die Erfindung erlaubt eine hohe Lebensdauer bei geringem Wartungsaufwand.

Ein geeignetes Kohlenwasserstoffgemisch zum erfindungsgemäßen Einsatz ist beispielsweise Jet A1 Kerosin, das typischerweise in der zivilen Luftfahrt eingesetzt wird. Es weist üblicherweise entsprechend den technischen Spezifikationen die folgenden Eigenschaften auf:

| | |
|---|---|
| Azidität, gesamt | 0,1 mg KOH/g (max.) |
| Aromaten | 22 Vol.% (max.) |
| Schwefel, gesamt | 0,3 Gew.% (max.) |
| Schwefel, Mercaptane | 0,003 Gew.% (max.) |
| Flammpunkt | 38°C (min.) |
| Dichte | 775 - 840kg/m³ (bei 15°C) |
| Gefrierpunkt | -47°C (max.) |
| Elektrische Leitfähigkeit | 50 - 450pS/m. |

Jet A1 Kerosin enthält n-Paraffine, Isoparaffine, Naphthene und Aromate. Eine typische Zusammensetzung ist wie folgt:

| | |
|---|---|
| C-Anzahl | Repräsentative Kohlenwasserstoffe |
| 6-8 | Cyclohexan, Methylcyclohexan, n-Octan, 2-Methylheptan, 1-Methyl-1-Ethylpentan, Xylol |
| 9-10 | Trans-Decalin,Cis-Decalin, Tetralin, Naphthalen |
| 11-12 | n-Dodekan, 2-Methylundecan, 1-Ethylnaphthalen, n-Hexylbenzol |
| 13-16 | n-Hexadecan, 2-Methylpentadecan, n-Decylbenzol |

Ausgehend von einem Airbus A330-200 als Referenzflugzeug mit einem Flugzyklus von 8,7±2,6 h, einem Tankvolumen von 112±5,3 t und einer Reichweite von 12225±275km, einem Energiebedarf von 500kW, einem λ-Faktor von 1,2 und der Annahme, dass 10% des eingesetzten Kerosins als Wasserstoffquelle einsetzbar sind, ergeben sich bei den folgenden Edukt-Produkt-Paarungen die folgenden Ergebnisse:

| | | | |
|---|---|---|---|
| Cylcohexan C₆H₁₂ | → | Benzol C₆H₆ | 13,4 h |
| Methylcyclohexan C₇H₁₄ | → | Toluol C₇H₈ | 13,4 h |
| Cis-Decalin C₁₀H₁₈ | → | Naphthalin C₁₀H₈ | 22,3 h |
| Trans-Decalin C₁₀H₁₈ | → | Naphthalin C₁₀H₈ | 22,3 h |
| n-Dodekan C₁₂H₂₆ | → | C₁₂H₁₈ | 17,5 h |

Es ist erkennbar, dass erfindungsgemäß ausreichend Energie für einen Flugzyklus bereitgestellt werden kann.

## Patentansprüche

1. Vorrichtung (5, 105) zur Energiegewinnung aus einem Kohlenwasserstoffgemisch (15) mit wenigstens einer dehydrierbaren Verbindung, insbesondere aus einem Kraftstoff auf Kohlenwasserstoffbasis, vorzugsweise aus Kerosin, mit:
- einem Tank (10, 110) zur Bereitstellung des Kohlenwasserstoffgemisches(15)und
- einer mit dem Tank (10, 110) verbundenen Verbrennungsmaschine (20, 120) zur Verbrennung von Kohlenwasserstoffen zur Gewinnung von thermischer und/oder kinetischer Energie (25, 125, 30, 130),
**dadurch gekennzeichnet, dass** die Vorrichtung (5, 105) zudem aufweist:
- eine Trenneinrichtung (35, 135) zur zumindest teilweisen Abtrennung der wenigstens einen dehydrierbaren Verbindung aus dem Kohlenwasserstoffgemisch (15),
- Dehydrierungsmittel (40, 140) zur Gewinnung von Wasserstoff aus der abgetrennten dehydrierbaren Verbindung durch Dehydrierung,
- erste Zuführungsmittel (45, 145) zur mittelbaren oder unmittelbaren Zuführung der dehydrierten Verbindung zur Verbrennungsmaschine (20, 120) und
- eine Brennstoffzelle (50, 150) zur Gewinnung von elektrischer Energie (55, 155) unter Umsetzung des gewonnenen Wasserstoffs.

2. Vorrichtung (5, 105) nach Anspruch 1, mit
- zweiten Zuführungsmitteln (60, 160a, 160b) zur mittelbaren oder unmittelbaren Zuführung des bei der Abtrennung der wenigstens einen dehydrierbaren Verbindung verbleibenden Kohlenwasserstoffgemischrestes zur Verbrennungsmaschine (20, 120).

3. Vorrichtung (5, 105) nach einem der vorstehenden Ansprüche,
wobei die Trenneinrichtung (35, 135) eine Destillationseinrichtung (65, 165a, 165b) zur destillativen Abtrennung einer die dehydrierbare Verbindung umfassenden Fraktion und/oder eine Sorptionseinrichtung zur sorptiven Abtrennung der zumindest einen dehydrierbaren Verbindung aus dem Kohlenwasserstoffgemisch (15) umfasst.

4. Vorrichtung (5, 105) nach einem der vorstehenden Ansprüche,
wobei die Trenneinrichtung (35, 135) ausgestaltet ist, die dehydrierbare Verbindung bei der Abtrennung zumindest teilweise von einer vorbestimmten Verunreinigung zu befreien.

5. Vorrichtung (5, 105) nach einem der vorstehenden Ansprüche,
wobei die ersten und/oder zweiten Zuführungsmittel (45, 145, 60, 160a, 160b) zur Zuführung der dehydrierten Verbindung bzw. des Kohlenwasserstoffgemischrestes an die Verbrennungsmaschine (20, 120) via den Tank (10, 110) ausgestaltet sind.

6. Vorrichtung (5, 105) nach einem der vorstehenden Ansprüche,
wobei die Vorrichtung (5, 105) zur Verarbeitung eines Flugzeugkerosins als Kohlenwasserstoffgemisch (15) eingerichtet ist und die Trenneinrichtung (35, 135) ausgestaltet ist, eine oder mehrere dehydrierbare Verbindungen aus dem Kohlenwasserstoffgemisch abzutrennen, die ausgewählt sind aus der Gruppe bestehend aus Cyclohexan, Methlycyclohexan, Cis-Decalin, Trans-Decalin, n-Dodekan, Tetralin, Dipenten, Diethlybenzen und deren Mischungen.

7. Vorrichtung (5, 105) nach einem der vorstehenden Ansprüche,
wobei die Dehydrierungsmittel (40, 140) einen Katalysator (70) für eine katalytische Dehydrierung der dehydrierbaren Verbindung umfassen.

8. Vorrichtung (5, 105) nach einem der vorstehenden Ansprüche, mit:
- einer Steuerungseinheit (75) zur Steuerung der Trenneinrichtung (35) und
- einer mit der Steuerungseinheit (75) verbundenen Analyseeinheit (80) zur Analyse der Zusammensetzung eines bereitgestellten Kohlenwasserstoffgemisches (15) im Betrieb,
wobei die Steuerungseinheit (75) ausgestaltet ist, im Betrieb die der Trenneinrichtung (35) zugeführte Menge des Kohlenwasserstoffgemisches (15) und das Abtrennen der wenigstens einen dehydrierbaren Verbindung daraus auf Basis der von der Analyseeinheit (80) bestimmten Zusammensetzung zu steuern.

9. Vorrichtung (5, 105) nach Anspruch 8,
wobei die Steuerungseinheit (75) ferner ausgestaltet ist, im Betrieb eine Gewinnung einer vorbestimmten Menge Wasserstoff pro Zeiteinheit zu gewährleisten, im Betrieb eine Gewinnung von Wasserstoff für einen vorbestimmten Zeitraum zu gewährleisten- und
die Art der Zuführung der dehydrierten Verbindung und/oder des bei der Abtrennung der wenigstens einen dehydrierbaren Verbindung verbleibenden Kohlenwasserstoffgemischrestes zur Verbrennungsmaschine (20, 120) zu steuern.

10. Vorrichtung (5, 105) nach Anspruch 8 oder 9,
wobei die Steuerungseinheit (75) ferner ausgestaltet ist, im Betrieb zu gewährleisten, dass vorbestimmte Eigenschaften der der Verbrennungsmaschine (20, 120) zugeführten Gesamtheit von Kohlenwasserstoffen innerhalb vorbestimmter Toleranzbereiche liegen.

11. Vorrichtung (5, 105) nach einem der Ansprüche 8 bis 10,
wobei die Steuerungseinheit (75) eine Berechungseinheit (85) besitzt, die eingerichtet ist, einen zeitlichen Verlauf
- der der Trenneinrichtung (35, 135) zugeführten Kohlenwasserstoffgemischmenge,
- der Abtrennung der wenigstens einen dehydrierbaren Verbindung in der Trenneinrichtung (35, 135) und/oder
- der Art der Zuführung der dehydrierten Verbindung und/oder des bei der Abtrennung der wenigstens einen dehydrierbaren Verbindung verbleibenden Kohlenwasserstoffgemischrestes zur Verbrennungsmaschine (20, 120) auf Basis der von der Analyseeinheit (80) bestimmten Zusammensetzung zu bestimmen, bei dem gewährleistet ist, dass für einen vorbestimmten Zeitraum im Betrieb vorbestimmte Eigenschaften der der Verbrennungsmaschine (20, 120) zugeführten Gesamtheit von Kohlenwasserstoffen innerhalb vorbestimmter Toleranzbereiche liegen.

12. Vorrichtung (5, 105) nach einem der vorstehenden Ansprüche, mit:
- einer Mischeinheit (90) zur Herstellung einer Mischung aus
- dem Kohlenwasserstoffgemisch (15),
- dem bei der Abtrennung der wenigstens einen dehydrierbaren Verbindung verbleibenden Kohlenwasserstoffgemischrest und
- der dehydrierten Verbindung
in vorbestimmten Anteilen und
- einer Messeinheit (95) zur Messung vorbestimmter Eigenschaften der Mischung.

13. Vorrichtung (5, 105) nach einem der vorstehenden Ansprüche, mit:
- einem Wasserspeicher (100) zur Aufnahme von in der Brennstoffzelle (50) erzeugtem Wasser.

14. System zur Energiegewinnung mit:
- einer Vorrichtung (5, 105) nach einem der vorstehenden Ansprüche und
- einem Kohlenwasserstoffgemisch (15) mit wenigstens einer dehydrierbaren Verbindung, insbesondere einem Kraftstoff auf Kohlenwasserstoffbasis, vorzugsweise Kerosin.

15. Verfahren zur Energiegewinnung aus einem Kohlenwasserstoffgemisch (15) mit wenigstens einer dehydrierbaren Verbindung, insbesondere aus einem Kraftstoff auf Kohlenwasserstoffbasis, vorzugsweise aus Kerosin, mit den Schritten:
- Bereitstellen (305, 405) des Kohlenwasserstoffgemisches (15) und
- Verbrennen (365, 465) von Kohlenwasserstoffen zur Gewinnung von thermischer und/oder kinetischer Energie,
**dadurch gekennzeichnet, dass** das Verfahren als weitere Schritte umfasst:
- zumindest teilweises Abtrennen (315, 415) wenigstens einer vorbestimmten dehydrierbaren Verbindung aus dem Kohlenwasserstoffgemisch (15),
- Gewinnen (325) von Wasserstoff aus der abgetrennten dehydrierbaren Verbindung durch Dehydrierung,
- mittelbares oder unmittelbares Zuführen (345, 445) der dehydrierten Verbindung zur Verbrennungsmaschine und
- Umsetzen (355, 455) des gewonnenen Wasserstoffs zur Gewinnung von elektrischer Energie.

## Claims

1. Apparatus (5, 105) for the generation of energy from mixed hydrocarbon feedstock (15) with at least one dehydrogenatable compound, in particular from hydrocarbon-based fuel, preferably from jet fuel with:
- A tank (10, 110) for the supply of the mixed hydrocarbon feedstock (15) and
- A combustion engine (20, 120) connected to the tank (10, 110) for the combustion of hydrocarbon feedstock for the production of thermal and/or kinetic energy (25, 125, 30, 130) **characterised In that** the apparatus (5,105) additionally Includes:
- A separating device (35, 135) for at least the partial separation of at least one dehydrogenatable compound from mixed hydrocarbon feedstock (15),
- Dehydrogenating agents (40, 140) for the production of hydrocarbon from the separated dehydrogenatable compound through dehydrogenation,
- First feed means (45, 145) for the direct or indirect supply of dehydrogenated compound to the combustion engine (20, 120) and
- A fuel cell (50, 150) for the generation of electrical energy (55, 155) using the obtained hydrogen.

2. Apparatus (5, 105) of claim 1 with:
- Second feed means (60, 160a, 160b) for the direct or indirect supply of the mixed hydrocarbon feedstock residue to the combustion engine (20, 120) produced as a result of the separation of at least one dehydrogenetable compound.

3. Apparatus (5, 105) of one of the previous claims,
wherein the separating system (35, 135) comprises a distillation plant (65, 165a, 165b) for the distillative separation of a fraction comprising the dehydrogenetable compound and/or a sorption system for the sorptive separation of at least one dehydrogenetable compound from the mixed hydrocarbon feedstock (15).

4. Apparatus (5, 105) of one of the previous claims,
wherein the separating system (35, 135) is designed to free the dehydrogenatable compound during the at least partial separation of predefined impurities.

5. Apparatus (5, 105) of one of the previous claims, wherein the first and/or second feed means (45, 145, 60, 160a, 160b) are designed for the supply of dehydrogenated compound and/or of the mixed hydrocarbon feedstock residue to the combustion engine (20,120) via the tank (10, 110).

6. Apparatus (5, 105) of one of the previous claims,
wherein the apparatus (5, 105) Is set up for the processing of aviation kerosene as hydrocarbon feedstock (15) and the separating system (35, 135) is designed for the separation of one or several dehydrogenatable mixed hydrocarbon feedstock compounds that are selected from a group consisting of cyclohexane, methylcyclohexane, cis-decalin, trans-decalin, n-dodecan, tetraline, dipentene, diethylbenzene and their mixtures.

7. Apparatus (5, 105) of one of the previous claims,
wherein dehydrogenating agents (40, 140) include a catalyst (70) for the catalytic dehydrogenation of the dehydrogenetable compound.

8. Apparatus (5, 105) of one of the previous claims, including:
- a control unit (75) for the control of the separating system (35) and
- an analysis unit (80) connected to the control unit (75) for the analysis of the composition of a supplied mixed hydrocarbon feedstock (15) in operation,
wherein the control unit (75) is designed to control the amount of mixed hydrocarbon feedstock (15) supplied to the separating system (35) and the separation of at least one dehydrogenatable compound from it based on the composition determined by the analysis unit (80).

9. Apparatus (5, 105) of claim 8,
wherein the control unit (75) is further designed in operation to ensure the production of a predefined amount of hydrogen per time unit, in operation to ensure the production of hydrogen for a predefined period and
to control the type of supply of dehydrogenated compound and/or the mixed hydrocarbon feedstock residue for the combustion engine (20, 120) during the separation of at least one dehydrogenatable compound.

10. Apparatus (5, 105) of claim 8 or 9,
wherein the control unit (75) is further designed In operation to ensure that predefined characteristics of the total amount of hydrocarbon feedstock supplied to the combustion engine (20, 120) lie within predefined tolerance ranges.

11. Apparatus (5,105) of one of the claims 8 to 10,
wherein the control unit (75) possesses a calculator (85) which is devised to determine the time sequence of the amount of
- mixed hydrocarbon feedstock supplied to the separating system (35,135),
- the separation of at least one dehydrogenatable compound in the separating system (35, 135) and/or the type of supply of the dehydrogenated compound and/or of the mixed hydrocarbon feedstock residue to the combustion engine (20, 120) during the separation of at least one dehydrogenatable compound, based on the composition determined by the analysis unit (80), wherein it is ensured that for a predefined period In operation predefined characteristics of the total amount of hydrocarbon feedstock supplied to the combustion engine (20, 120) lie within predefined tolerance ranges.

12. Apparatus (5, 105) of one of the previous claims, including:
- A mixing unit (90) for the production of a mixture from
- the mixed hydrocarbon feedstock (15),
- the mixed hydrocarbon feedstock residue produced as a result of the separation of at least one dehydrogenatable compound, and
- the dehydrogenated compound
in predefined proportions, and
- A measuring unit (95) for the measurement of predefined characteristics of the mixture.

13. Apparatus (5, 105) of one of the previous claims, including:
- A water storage tank (100) for the reception of water produced in the fuel cell (50).

14. Power generation system with:
- An apparatus (5, 105) of one of the previous claims, and
- Mixed hydrocarbon feedstock (15) with at least one dehydrogenatable compound, especially hydrocarbon-based fuel, preferably from jet fuel.

15. Procedure for the generation of energy from mixed hydrocarbon feedstock (15) with at least one dehydrogenatable compound, in particular from hydrocarbon-based fuel, preferably from Jet fuel, consisting of the following steps:
- Supply (305, 405) of mixed hydrocarbon feedstock (15), and
- Combustion (365, 465) of hydrocarbon compounds for the production of thermal and/or kinetic energy, **characterised in that** the procedure consists of the following additional steps:
- At least partial separation (315, 415) of at least one predefined dehydrogenatable compound from mixed hydrocarbon feedstock (15),
- Production (325) of hydrogen from separated dehydrogenatable compound through dehydrogenation;
- Direct or indirect supply (325) of dehydrogenated compound to combustion engine, and
- Implementation (355, 455) of obtained hydrogen for the generation of electrical energy.

## Revendications

1. Dispositif (5, 105) pour produire de l'énergie à partir d'un mélange d'hydrocarbures (15) avec au moins un composé déshydrogénable, en particulier à partir d'un carburant à base d'hydrocarbure, de préférence à partir de kérosène, avec :
- un réservoir (10, 110) pour la mise à disposition du mélange d'hydrocarbures (15) et
- une machine thermique (20, 120) reliée au réservoir (10, 110) pour la combustion d'hydrocarbures en vue de la production d'énergie thermique et/ou cinétique (25, 125, 30, 130),
**caractérisé en ce que** le dispositif (5, 105) comporte en outre :
- un dispositif de séparation (35, 135) pour la séparation au moins partielle dudit au moins un composé déshydrogénable depuis le mélange d'hydrocarbures (15),
- des moyens de déshydrogénation (40, 140) pour l'obtention d'hydrogène par déshydrogénation à partir du composé déshydrogénable séparé,
- des premiers moyens d'acheminement (45, 145) pour l'acheminement indirect ou direct du composé déshydrogéné à la machine thermique (20, 120) et
- une pile à combustible (50, 150) pour l'obtention d'énergie électrique (55, 155) par réaction de l'hydrogène obtenu.

2. Dispositif (5, 105) selon la revendication 1, avec
- des deuxièmes moyens d'acheminement (60, 160a, 160b) pour l'acheminement indirect ou direct à la machine thermique (20, 120) du mélange d'hydrocarbures restant lors de la séparation dudit au moins un composé déshydrogénable.

3. Dispositif (5, 105) selon l'une quelconque des revendications précédentes,
dans lequel le dispositif de séparation (35, 135) comprend un dispositif de distillation (65, 165a, 165b) pour la séparation par distillation d'une fraction comprenant le composé déshydrogénable et/ou un dispositif de sorption pour la séparation par sorption dudit au moins un composé déshydrogénable depuis le mélange d'hydrocarbures (15).

4. Dispositif (5, 105) selon l'une quelconque des revendications précédentes,
dans lequel le dispositif de séparation (35, 135) est configuré de sorte à débarrasser au moins en partie le composé déshydrogénable d'une impureté prédéfinie lors de la séparation.

5. Dispositif (5, 105) selon l'une quelconque des revendications précédentes,
dans lequel les premiers et/ou deuxièmes moyens d'acheminement (45, 145, 60, 160a, 160b) sont configurés pour l'acheminement du composé déshydrogéné, respectivement du reste de mélange d'hydrocarbures à la machine thermique (20, 120) via le réservoir (10, 110).

6. Dispositif (5, 105) selon l'une quelconque des revendications précédentes,
dans lequel le dispositif (5, 105) est équipé pour le traitement d'un kérosène d'avion comme mélange d'hydrocarbures (15) et dans lequel le dispositif de séparation (35, 135) est configuré pour séparer depuis le mélange d'hydrocarbures un ou plusieurs composés déshydrogénables qui sont choisis parmi le groupe consistant en le cyclohexane, le méthylcyclohexane, la cis-décaline, la trans-décaline, le n-dodécane, la tétraline, le dipentène, le diéthylbenzène et leurs mélanges.

7. Dispositif (5, 105) selon l'une quelconque des revendications précédentes, dans lequel les moyens de déshydrogénation (40, 140) comprennent un catalyseur (70) pour une déshydrogénation catalytique du composé déshydrogénable.

8. Dispositif (5, 105) selon l'une quelconque des revendications précédentes, avec
- une unité de commande (75) pour la commande du dispositif de séparation (35) et
- une unité d'analyse (80) liée à l'unité de commande (75) pour l'analyse de la composition d'un mélange d'hydrocarbures (15) mis à disposition,
l'unité de commande (75) étant configurée pour commander en service la quantité du mélange d'hydrocarbures (15) acheminée au dispositif de séparation (35) et la séparation dudit au moins un composé déshydrogénable de ce mélange sur la base de la composition déterminée par l'unité d'analyse (80).

9. Dispositif (5, 105) selon la revendication 8, dans lequel l'unité de commande (75) est configurée en outre pour assurer en service une obtention d'une quantité prédéfinie d'hydrogène par unité de temps, pour assurer en service une obtention d'hydrogène pour une espace de temps prédéfini et
pour commander le mode d'acheminement à la machine thermique (20, 120) du composé déshydrogéné et/ou du mélange d'hydrocarbures restant lors de la séparation dudit au moins un composant déshydrogénable.

10. Dispositif (5, 105) selon la revendication 8 ou 9,
dans lequel l'unité de commande (75) est en outre configurée pour assurer en service que des propriétés prédéfinie de l'ensemble des hydrocarbures acheminés à la machine thermique (20, 120) soient comprises à l'intérieur de plages de tolérance prédéfinies.

11. Dispositif (5, 105) selon l'une quelconque des revendications 8 à 10,
dans lequel l'unité de commande (75) possède une unité de calcul (85) qui est configurée pour déterminer un déroulement en fonction du temps
- de la quantité de mélange d'hydrocarbures acheminée au dispositif de séparation (35, 135),
- de la séparation dudit au moins un composé déshydrogénable dans le dispositif de séparation (35, 135) et/ou
- de la nature de l'acheminement à la machine thermique (20, 120) du composé déshydrogéné et/ou du mélange d'hydrocarbures restant lors de la séparation dudit au moins un composé déshydrogénable sur la base de la composition déterminée par l'unité d'analyse (80), lors de quoi il est assuré que pour un espace de temps prédéterminé en service, certaines propriétés prédéfinies de l'ensemble des hydrocarbures acheminés à la machine thermique (20, 120) sont comprises dans des plages de tolérance prédéfinies.

12. Dispositif (5, 105) selon l'une quelconque des revendications précédentes, avec
- une unité de mélangeage (90) pour la préparation d'un mélange
-- du mélange d'hydrocarbures (15),
-- du reste de mélange d'hydrocarbures restant après la séparation dudit au moins un composé déshydrogénable et
-- du composé déshydrogéné dans des proportions prédéfinies et
- une unité de mesure (95) pour la mesure de propriétés prédéfinies du mélange.

13. Dispositif (5, 105) selon l'une quelconque des revendications précédentes, avec
- un accumulateur d'eau (100) pour recueillir l'eau produite dans la pile à combustible (50).

14. Système de production d'énergie avec :
- un dispositif (5, 105) selon l'une quelconque des revendications précédentes et
- un mélange d'hydrocarbures (15) avec au moins un composé déshydrogénable, en particulier un carburant à base d'hydrocarbures, de préférence du kérosène.

15. Procédé de production d'énergie à partir d'un mélange d'hydrocarbures (15) avec au moins un composé déshydrogénable, en particulier un carburant à base d'hydrocarbures, de préférence du kérosène, avec les étapes :
- mise à disposition (305, 405) du mélange d'hydrocarbures (15) et
- combustion (365, 465) d'hydrocarbures pour l'obtention d'énergie thermique et/ou cinétique, **caractérisé en ce que** le procédé comprend comme autres étapes :
- la séparation (315, 415) au moins partielle d'au moins un composé prédéterminé déshydrogénable depuis le mélange d'hydrocarbures (15),
- l'obtention (325) d'hydrogène depuis le composé déshydrogénable par déshydrogénation,
- l'acheminement (345, 445) indirect ou direct du composé déshydrogéné à la machine thermique et
- la réaction (355, 455) de l'hydrogène obtenu pour l'obtention d'énergie électrique.
